# EUROPÄISCHE PATENTSCHRIFT

(11) **EP 0 511 344 B1**
(45) Veröffentlichungstag und Bekanntmachung des Hinweises auf die Patenterteilung: **24.04.1996**
(21) Anmeldenummer: 91919462.1
(22) Anmeldetag: 18.11.1991
(51) Int. Cl.: H02M 7/48

(54) **VERFAHREN UND VORRICHTUNG ZUM PARALLELSCHALTEN VON UMRICHTERN**
METHOD AND DEVICE FOR CONNECTING FREQUENCY CONVERTERS IN PARALLEL
PROCEDE ET DISPOSITIF POUR LE MONTAGE EN PARALLELE DE CONVERTISSEURS DE FREQUENCE

(30) Priorität: 19.11.1990 CH 3656/90; 19.11.1990 CH 3658/90
(43) Veröffentlichungstag der Anmeldung: 04.11.1992
(73) Patentinhaber: INVENTIO AG, CH-6052 Hergiswil NW (CH)
(72) Erfinder: ROHNER, Ronald, CH-5400 Baden (CH)
(86) Internationale Anmeldenummer: CH9100236
(87) Internationale Veröffentlichungsnummer: WO9209137

(56) Entgegenhaltungen:
- DE-A- 3 602 496
- DE-A- 3 840 806
- DE-B- 2 904 786
- DE-C- 4 038 869
- GB-A- 2 098 414

## Beschreibung

Die Realisierung schneller Umrichter mit mehreren direkt parallelgeschalteten Einzelgeräten ist nur mit erheblichem Aufwand auf Seite der Steuer- und Regelelektronik möglich. Dieser ist nur dann vertretbar, wenn bestimmte Anforderungen an den Umrichter auf andere Weise nicht erfüllt werden können und bzw. oder eine Parallelschaltung entscheidende Vorteile gegenüber der herkömmlichen Lösungen mit einem Einzelgerät bietet.

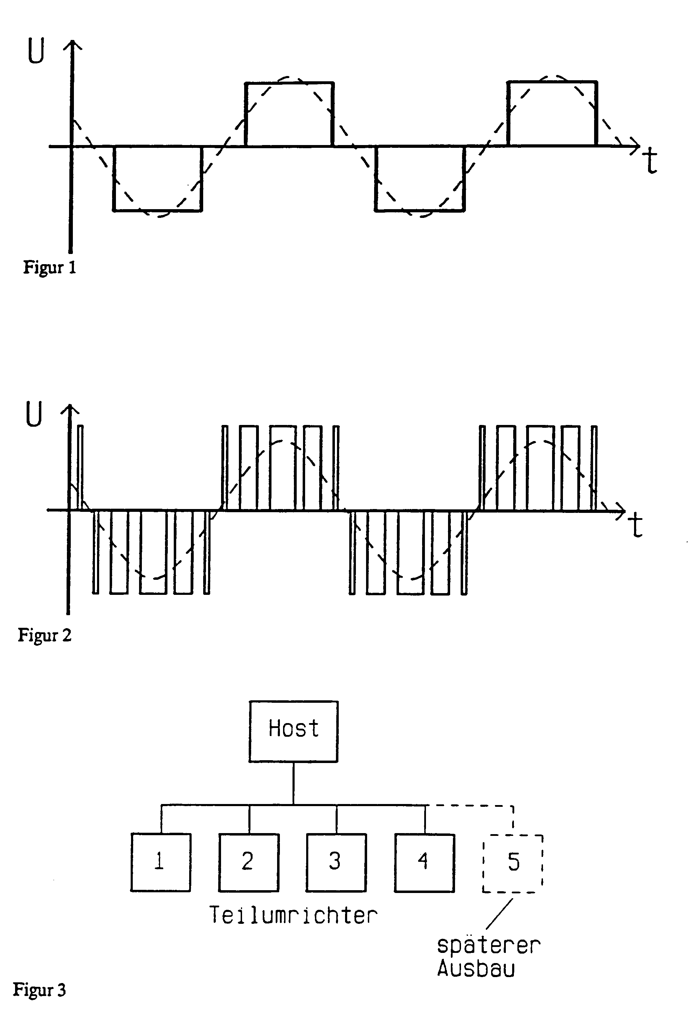

Ein Entwicklungsziel heutiger Motorenbauer ist die Konstruktion immer schneller drehender Maschinen. Sogenannt "schnellaufende Antriebe" benötigen Betriebsfrequenzen von über 500 Hz. Bei der angestrebten Leistung von mehreren 100 kVA können herkömmliche Thyristor- oder GTO-(Gate Turn Off)-Umrichter diese Frequenzen ebenfalls noch in Form einer Grundwellentaktung zur Verfügung stellen, siehe Figur 1.

Die Nachteile dieser groben, rechteckförmigen Spannungseinprägung und der daraus resultierenden un-sinusförmigen Stromkurve sind in Form von zusätzlichen Verlusten und Drehmomentstössen hinreichend bekannt. Seit langem werden daher Verfahren angewendet, welche diese Spannungsblöcke zeitlich in kleine Einheiten unterteilen und so einen nahezu sinusförmigen Verlauf des Motorstromes ermöglichen. Für den Umrichter bedeutet dies, dass die Leistungsschalter entsprechend schneller ein- und ausgeschaltet werden müssen. Je schneller die Schalter sind, desto feiner kann die Unterteilung der Spannungsblöcke erfolgen und desto sinusförmiger wird auch der Motorstrom, siehe Figur 2.

Wird nun die Betriebsfrequenz von den üblichen 50 bis 120 Hz auf über 500 Hz bei schnellaufenden Antrieben angehoben, so muss auch die Schaltfrequenz der Schalter entsprechend erhöht werden. Das heist, die Thyristor- und GTO-Schalter kommen erst recht an die Grenze ihrer Schaltgeschwindigkeit.

Schnelle Umrichter mit Schaltfrequenzen bis zu 100 kHz, die eine sinusförmige Stromkurve auch bei 500 Hz Ausgangsfrequenz ermöglichen, gibt es serienmässig nur bis zu einer Leistungsklasse von ca. 50 kVA. Eine Leistungserhöhung auf mehrere 100 kVA bei gleichbleibend hoher Taktrate ist zum heutigen Zeitpunkt auf herkömmliche Weise kaum denkbar, daher der Wunsch nach parallelgeschalteten Umrichtern.

Aus der Offenlegungsschrift DE-A-384 08 06 ist zur Erzeugung eines grösseren Stromes, als einzelne Umrichter erzeugen können das Parallelschalten mehreren Umrichter bekannt. Dabei werden bei Abweichungen vom Sollwert alle Umrichter auf dieselbe Weise durch eine gemeinsame, korrigierende Regelgrösse gesteuert.

Im Gegensatz dazu beschreibt die Patentschrift DE-B-2.904.786 eine Schaltung, bei welcher die Funktion jedes Wechselrichters durch eine eigene Regelgrösse korrigiert wird. Diese steuert jedoch nur Phase und Amplitude der vom betreffenden Umrichter gelieferten sinusförmigen Spannung konstanter Frequenz.

Die Entwicklung eines parallelen Umrichters unterscheidet sich in manchen Punkten von der eines herkömmlich aufgebauten Gerätes. Während bis anhin die Ansteuerung, Beschaltung und der Schutz der Leistungsventile im Zentrum des Interesses standen, sind es nun konzeptionelle Ueberlegungen, die vermehrt in den Vordergrund treten. Probleme des Schutzes können nicht mehr einfach als lokale Grössen betrachtet werden, sondern sind vielmehr auf das Gesamtsystem zu beziehen. Fragen der Kommunikation zwischen den Teilumrichtern sind ebenso zu lösen wie die Problematik der Störsicherheit eines verteilten Systems. Dabei darf nie vergessen werden, dass die Reaktionszeit, also diejenige Zeit, die für Erfassung, Verarbeitung und Ausgabe von Anweisungen an das gesamte System zur Verfügung steht, nur wenige Mikrosekunden betragen darf. Im folgenden werden daher Ueberlegungen angestellt, wie eine technisch und wirtschaftlich vertretbare Realisierung paralleler Umrichter aussehen kann.

Nachfolgend werden die verschiedenen Möglichkeiten der Parallelschaltung von Umrichtern aufgezeigt und der Versuch einer Systematisierung unternommen. Unterschieden wird nach folgenden vier Hauptkriterien:
- Energiekopplung
- Ausführung der leistungsseitigen Verbindung
- Taktung
- Stromregelung

Die Energiekopplung, d.h. das Zusammenschalten der pro Teilumrichter gelieferten Energie, kann auf elektrische oder magnetische Art geschehen. Bei der elektrischen Kopplung werden die einzelnen Phasen der Teilumrichter miteinander verbunden und die Last wie üblich angeschlossen. Eine magnetische Kopplung liegt z.B. dann vor, wenn ein Motor mit Mehrfachwicklung eingesetzt wird.

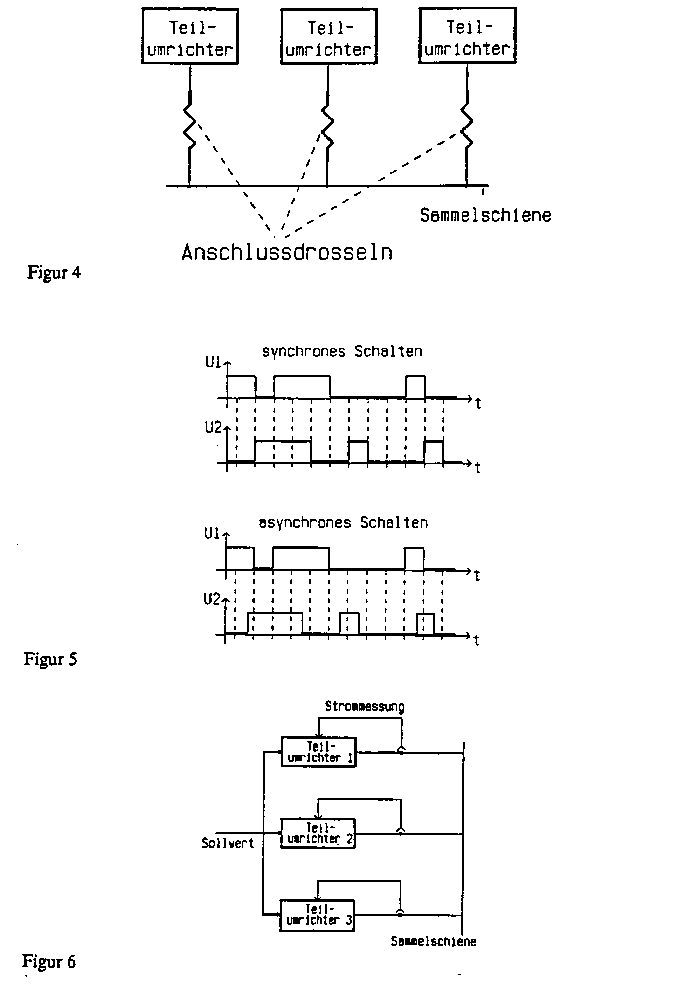

Bei der elektrischen Kopplung können die Teilumrichter entweder über grosse Anschlussdrosseln, welche eine systembedingte Fnktion ausüben, oder über kleine, die nur Schutzfunktionen besitzen, miteinander verbunden werden. Im letzteren Fall wird von direkter Kopplung gesprochen, siehe Figur 4.

Die Taktung bezieht sich auf die Schaltzeitpunkte der Leistungsschalter. Werden diese bei allen Teilumrichtern im selben zeitlichen Raster umgeschaltet, spricht man von synchroner, ansonsten von asynchroner Taktung, siehe Figur 5.

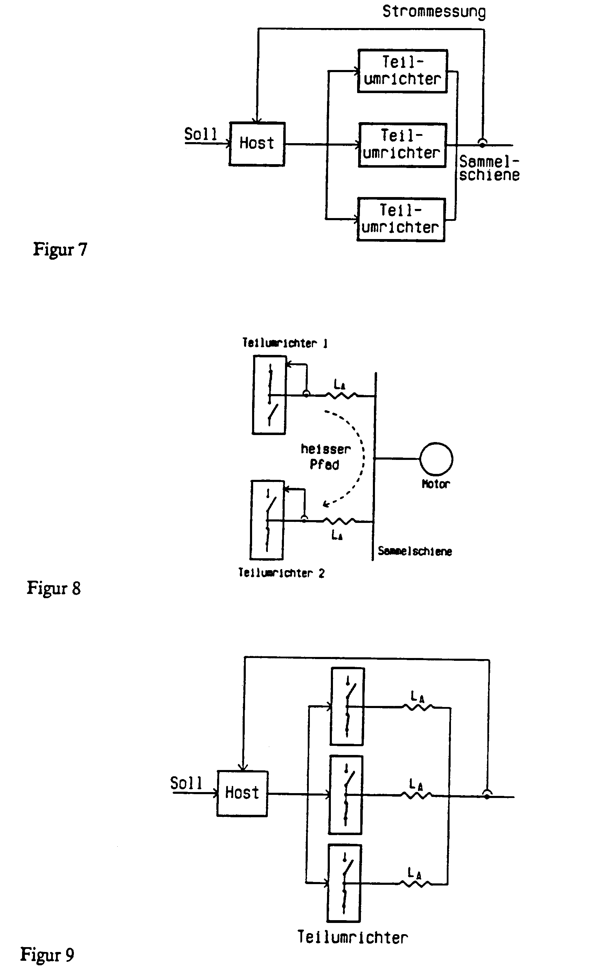

Regelt jeder Teilumrichter einen Strom unabhängig von den anderen, spricht man von einer Einzelstromregelung, siehe Figur 6. Eine Gesamtstromregelung erfolgt, wenn der vereinte Ausgangsstrom aller Teilumrichter erfasst und geregelt wird, siehe Figur 7.

Kombiniert man die aufgeführten Merkmale, so erhält man parallele Umrichter mit ganz verschiedenen Eigenschaften. Sie unterscheiden sich unter anderem in folgenden Punkten:
- technische Eigenschaften
- Realisierbarkeit
- Wirtschaftlichkeit
- Redundanzverhalten.

Im folgenden sollen die wichtigsten Möglichkeiten kurz vorgestellt und besprochen werden.

Bei dieser Kopplungsart handelt es sich um die einfachste elektrische Verbindungsart zwischen Umrichtern. Allen Teilumrichtern wird derselbe Stromsollwert vorgegeben, worauf jeder für sich versucht, seinen Ausgangsstrom dem Sollwert nachzuführen. Dies kann aber bedeuten, dass z.B. der erste Teilumrichter den oberen Schalter der Phase A schliesst, der zweite Teilumrichter gleichzeitig den unteren Schalter derselben Phase. Als Folge entsteht ein "heisser Pfad" zwischen diesen beiden Teilumrichtern und die Schalter werden unweigerlich zerstört. Abhilfe kann lediglich dadurch geschaffen werden, dass zwischen die Teilumrichter und die Sammelschiene genügend grosse Anschlussdrosseln geschaltet werden, die den Stromanstieg begrenzen, siehe Figur 8.

Die Nachteile dieser Variante sind:
- schlechte Dynamik infolge grosser Anschlussdrosseln
- eingeschränkter Wirkungsgrad
- Baugrösse der Anschlussdrosseln.

Aufgabe der Anschlussdrosseln ist es, den Stromanstieg beim "betriebsmässigen Fall" des "heissen Pfades zwischen den Teilumrichtern" zu begrenzen. Damit limitieren sie allerdings auch den maximal erreichbaren Stromanstieg auf der Lastseite.

Je kleiner die Anschlussdrosseln gewählt werden, umso stärker wird die gegenseitige Beeinflussung der Teilumrichter. Es kommt zu einem gegenseitigen Aufwiegeln, das heisst, Blindleistung wird zwischen den Teilumrichtern hin und her geschoben und der Wirkungsgrad fällt entsprechend ab. Nicht zu unterschätzen ist auch die enorme Baugrösse der erforderlichen Drosseln.

Aus dem Blockschaltbild, Figur 9, ist zu erkennen, dass hier lediglich der Gesamtstrom gemessen wird. Aus dem Vergleich mit dem Sollwert werden alle Schalter der Einzelnen Teilumrichter auf Befehl des Hostrechners simultan und gleichsinning ein- oder ausgeschaltet. Damit ist das Problem des "heissen Pfades" zwischen einzelnen Teilumrichtern beseitigt und die Anschlussdrosseln können theoretisch wegfallen oder, da sie nur noch Hilfsfunktionen ausüben, bedeutend kleiner gewählt werden.

So einfach und naheliegend dieser Lösungsvorschlag auch erscheint, realisieren lässt er sich kaum. Die Schalter, wie sie in Figur 9 als einfache Striche gezeichnet sind, bestehen in Wirklichkeit aus vielen Einzelelementen, von der ganzen Ansteuerung etc. ganz zu schweigen. Oertliche Verteilung und thermische Einflüsse fügen ihren Teil dazu bei, dass sich eine stark asymmetrische Stromverteilung zwischen den einzelnen Teilumrichtern ergeben kann.

Die Erfindung soll die erwähnten Nachteile vermeiden, und es ermöglichen, mehrere Umrichter auf Geräteebene direkt parallel zu schalten (Begriff: parallele Umrichter), um die geforderte Leistung zu erreichen. Zu diesem Zweck ist die Erfindung wie in den Hauptansprüchen beschrieben, definiert. Das erfindungsgemässe Verfahren gestattet es, innerhalb kleiner Zeitabschnitte den von jedem Umrichter gelieferten Strom fast trägheitslos und individuell auf den Wert einzustellen, der im Zusammenspiel mit den anderen Umrichtern und in Funktion des von einem angetriebenen Gerät (etwa eines Elektromotors) benötigt wird. Die Vorteile des Verfahrens sind seine prinzipielle Einfachheit und die schnelle Arbeitsweise einer Verschiebung von Ein- und Ausschaltpunkten, welche unter Verwendung üblicher elektronischer Elemente eine fast trägheitslose Anpassung an die momentanen Betriebsbedingungen gestattet. Dadurch werden nebst der Leistungssteigerung weitere, sehr interessante Eigenschaften erzielt, die trotz des Mehraufwandes an Elektronik das Prinzip der Parallelschaltung, auch vom wirtschaftlichen und sicherheitstechnischen Standpunkt her betrachtet, interessant machen.

Der Preis einer Umrichteranlage richtet sich nicht nur nach den unmittelbaren Ventilkosten, sondern hängt auch vom Aufwand ab, der erbracht werden muss, um eine bestimmte Betriebssicherheit und Verfügbarkeit zu garantieren. Dies kann z.B. konkret bedeuten, dass immer eine zweite Anlage als Reserveeinheit bereitstehen muss. Nebst dem doppelten Investitions- und Wartungsaufwand wirkt sich dabei insbesondere der doppelte Raumbedarf sehr negativ auf die Kostenrechnung aus. Hinzu kommt, dass das Umschalten von der defekten Anlage auf die Reserveanlage immer eine gewisse Zeit in Anspruch nimmt. In manchen Fällen sogar einen Betriebsunterbruch notwendig macht. Das vorgeschlagene Parallelschaltungsprinzip bringt gerade hinsichtlich der Betriebssicherheit und Redundanz ganz neue Perspektiven mit sich.

Ein weiterer Punkt, der bei parallelgeschalteten Umrichtern ins Auge fällt, ist ihr modularer Aufbau. So kann mit denselben Grundbausteinen eine ganze Umrichterfamilie realisiert werden, ohne dass entsprechend viele verschiedene Typen entwickelt werden müssen. Nebst dem Vorteil der feinen Leistungsabstufung ergibt sich die Möglichkeit, eine installierte Anlage nachträglich aufzubauen, indem einfach weitere Teilumrichter angekoppelt werden, siehe Figur 3.

Im folgenden soll die Erfindung anhand von Ausführungsbeispielen und der Zeichnung näher erläutert werden.

Es zeigt:
Figur 1 die Ausgangsspannung einer einphasigen Brückenschaltung bei Grundwellentaktung,
Figur 2 die Ausgangsspannung einer einphasigen Brückenschaltung bei Pulsmodulation,
Figur 3 den Ausbau eines parallelen Umrichters durch nachträgliches Ankoppeln eines zusätzlichen Teilumrichters. Der mit "Host" bezeichnete Block stellt ein übergeordnetes Rechnersystem dar, welches die gesamte Umrichteranlage steuert, Figur 4 die Parallelschaltung von Teilumrichtern durch leistungsseitige Verbindung über Anschlussdrosseln,
Figur 5 das synchrone und asynchrone Schaltverhalten (Taktung) zweier Umrichter. Bei der synchronen Taktung fallen die Schaltflanken beider Umrichter (U1 und U2) genau aufeinander. Im asynchronen Fall findet das Umschalten höchstens zufällig einmal zu gleichen Zeit statt, da keinerlei zeitliche Kopplung zwischen den Umrichtern besteht,
Figur 6 die Einzel-Regelung des Stromes jedes Teilumrichters unabhängig von den anderen,
Figur 7 drei parallelgeschaltete Umrichter mit Gesamtstromregelung. Der "Host" stellt ein übergeordnetes Rechnersystem dar, welches die Gesamtstromregelung ausführt und die Teilumrichter entsprechend ansteuert,
Figur 8 den "Heissen Pfad" zwischen zwei Teilumrichtern. Die volle Zwischenkreisspannung liegt über den beiden Schaltern und den Anschlussdrosseln L_{A},
Figur 9 das Blockschaltbild einer Anlage, bei der nur der Gesamtstrom gemessen wird,
Figur 10 das Blockschaltbild einer Anlage, bei der ausser dem Gesamtstrom auch die Ausgangsströme des einzelnen Teilumrichters gemessen werden,
Figur 11 drei direkt parallelgeschaltete Teilumrichter mit Gesamtstromregelung und unterlagerter, verlustfreier Ausgleichsregelung (L_{A} = Anschlussdrosseln, alles einphasig dargestellt),
Figur 12 die Schaltzeitpunkte der Hauptregelung (Nullzeit) und das Zeitfenster für die Ausgleichsregelung. Innerhalb von diesem Fenster darf die Ausgleichsregelung jedes Teilumrichters den Schaltzeitpunkt der eigenen Schalter verschieben,
Figur 13 die Schaltzeitpunkte der Hauptregelung (a), eines Teilumrichters der zuviel Strom liefert (b), eines Teilumrichters, der zuwenig Strom liefert (c),
Figur 14 ein Ausführungsbeispiel der Erfindung mit zwei parallelgschalteten, dreiphasigen Transistorumrichtern,
Figur 15 eine Anlage mit den zum Schutz des Teilumrichters bei Auftreten eines heissen Pfades vorgesehenen Schmelzsicherungen,
Figur 16 die Wirkungsweise der Sicherungen wenn der obere und der untere Schalter eines Teilumrichters zugleich geschlossen sind, und
Figur 17 die Wirkungsweise der Sicherung bei einem Defekt in der Phasenstrom-Steuerung eines einzelnen Teilumrichters.

Im folgenden sollen einige der Erfindung zugrundeliegende Prinzipien erläutert und durch Ausführungsbeispiele illustriert werden.

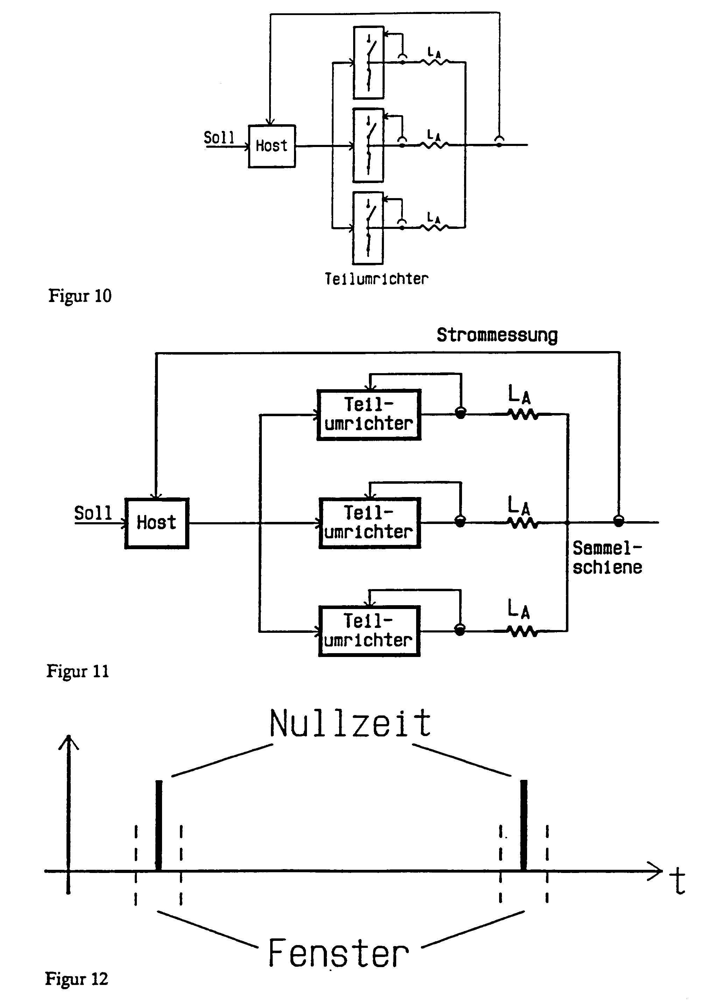

Kleine Anschlussdrosseln lassen sich nur realisieren, wenn die Schalter simultan und gleichsinnig schalten. Dies bringt unweigerlich eine Stromasymmetrie mit sich, da die einzelnen Strompfade nie absolut identisch zu realisieren sind. Demzufolge muss eine zweite unterlagerte Regelung eingeführt werden, deren Aufgabe es ist, eine Symmetrierung der Teilumrichterströme vorzunehmen. Da eine exakte Modellbildung der einzelnen Geräte und Strompfade nicht möglich sind, müssen dazu die Ausgangsströme der Teilumrichter einzeln gemessen werden, siehe Figur 10.

Direkt parallelgeschaltete Umrichter können nur dann problemlos eingesetzt werden, wenn eine aktive und verlustfreie Regelung vorhanden ist, welche allen möglichen Ursachen der Stromasymmetrie, selbst dann, wenn ein Mitkopplungseffekt vorliegt, wirkungsvoll entgegentreten kann. Mit dem vorgeschlagenen Konzept der "prinzipiell verlustfreien Ausgleichsregelung" ist es weder notwendig, dass sämtliche Urschen der Stromasymmetrierung bekannt sind, noch ist es erforderlich, deren Zusammenhänge und Einflussgrössen genau zu kennen. Das Blockschaltbild einer solchen Stromregelung ist in Figur 11 gezeigt.

Statt dass wie in Figur 11 der Gesamtstrom gemessen wird, ist auch eine Regelstruktur möglich, bei der ein (oder auch mehrere Teilumrichter) als Referenz herangezogen wird und dessen Ausgangsstrom als Sollwert für die übrigen Teilumrichter verwendet wird. Die Regelung funktioniert wie folgt.

Die Hauptregelung im "Host" bestimmt aus dem Vergleich des Gesamtausgangsstromes mit dem Sollwert, wann die oberen und wann die unteren Schalter aller Teilumrichter gesamthaft einbzw. ausgeschaltet werden müssen. Gleichzeitig berechnet die Hauptregelung durch eine einfache Division des Gesamtstromes durch die Anzahl Teilumrichter im Verband, welchen Strom im Idealfall jeder Teilumrichter liefern sollte. Dieser Wert wird an die Ausgleichsregelung der Teilumrichter als Sollwert weitergegeben. Bemerkt nun ein Teilumrichter, dass er zuviel oder zuwenig Strom liefert, wird er dies bei der nächsten Schaltzustandsönderung entsprechend berücksichtigen.

Die Hauptregelung befiehlt den Teilumrichtern also, wann sie welche Schalter öffnen oder schliessen müssen. Jeder Teilumrichter bekommt nun aber die Kompetenz, den exakten Zeitpunkt für seine Schalter in einem kleinen Bereich, einem Fenster, selbst zu variieren und so einen Stromausgleich herbeizuführen, siehe Figur 12.

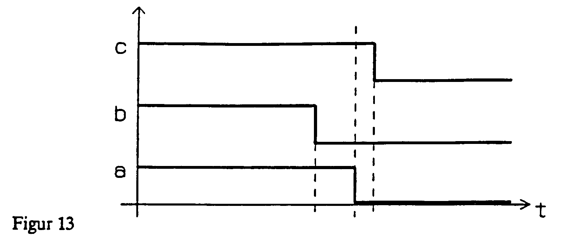

Liefert ein Teilumrichter zuviel Strom, so wird er den entsprechenden Schalter bereits vor dem "Zeitnullpunkt" öffnen. Ein anderer, der zuwenig Strom liefert, wird seinen Schalter hingegen erst nach dem "Zeitnullpunkt" öffnen und so den gewünschten Stromausgleich vornehmen, siehe Figur 13.

Die Ausgleichsregelung bildet also während sehr kurzer Zeit einen "heissen Pfad" zwischen den entsprechenden Schaltern der Teilumrichter. Zwischen diesen Schaltern befinden sich im wesentlichen nur die Anschlussdrosseln L_{A}, deren Grösse aufgrund des Sicherheitskonzeptes gegeben ist. Aus der Grösse der Anschlussdrossel und der Spannung über dem betreffenden Zweig errechnet sich die erforderliche Verschiebungszeit für den Schaltzeitpunkt, damit der gewünschte Stromausgleich herbeigeführt wird. Da sämtliche Messgrössen nur mit beschränkter Genauigkeit bestimmt und verarbeitet werden können, tritt die Ausgleichsregelung erst ab einer bestimmten prozentualen Abweichung vom Sollwert in Aktion. Damit wird verhindert, dass unnötig Blindleistung zwischen den Schaltern hin- und hergeschoben wird.

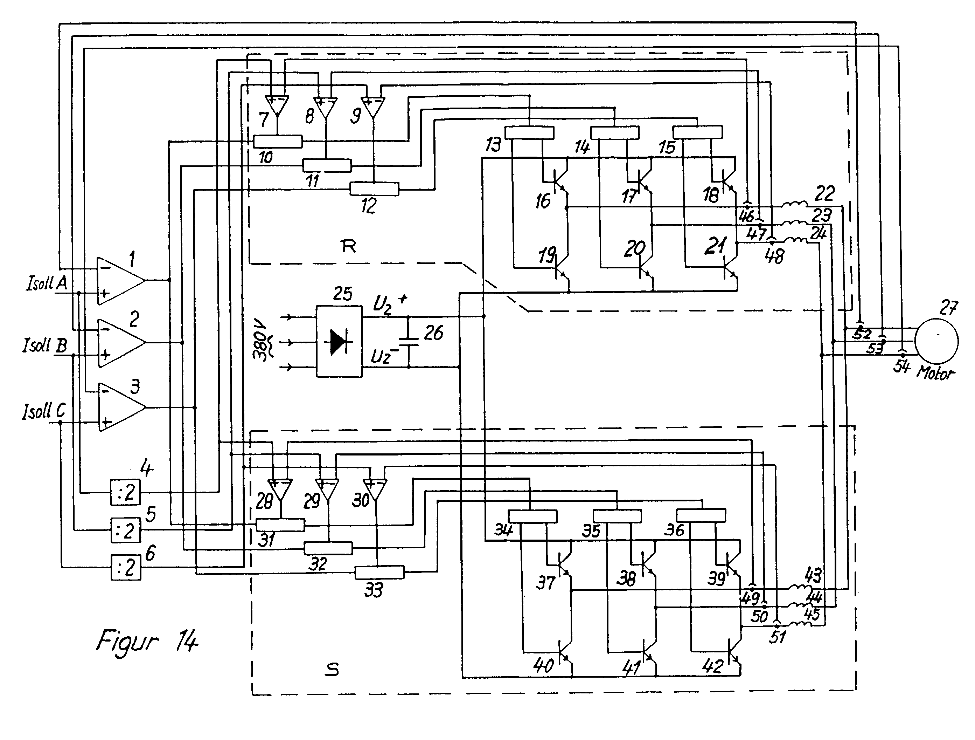

Die Figur 14 zeigt eine erfindungsgemässe Anlage mit zwei parallelgeschalteten dreiphasigen Transistorumrichtem. Der Ausgangssstrom soll von beiden Umrichtern zu je 50 % geliefert werden.

Der erste Umrichter, auch Teilumrichter R genannt, besteht aus den Transistoren 16 bis 21, den Transistoransteuereinheiten 13 bis 15, den Drosseln 22 bis 24, den Differenzverstärkern 7 bis 9, den verstellbaren Signalverzögerungseinheiten 10 bis 12 sowie den Strommessgliedern 46 bis 48.

Der zweite Umrichter, auch Teilumrichter S genannt, besteht aus den Transistoren 37 bis 42, den Transistoransteuereinheiten 34 bis 36, den Drosseln 43 bis 45, den Differenzverstärkern 28 bis 30, den verstellbaren Signalverzögerungseinheiten 31 bis 33 sowie den Strommessgliedern 49 bis 51.

Der Zwischenkreis wird gebildet aus dem Netzgleichrichter 25 und dem Zwischenkreiskondensator 26 und dient zum Gleichrichten und Sieben der dreiphasigen Netzeinspeisung. Beide Teilumrichter sind an denselben gemeinsamen Zwischenkreis angeschlossen.

Das Leitsystem, auch Host genannt, besteht aus den Komparatoren 1 bis 3, den Stromsollwertteilern 4 bis 6 sowie den Strommessgliedern 52 bis 54. Die Stromsollwertteiler dividieren die von aussen an die Anlage gelegten Stromsollwerte I_{soll A}, I_{soll B} und I_{soll C} durch zwei und berechnen so die Stromsollwerte, die jeder der beiden Teilumrichter liefern muss. Die Strommessglieder 52 bis 54 messen die Ausgangsströme der gesamten Umrichteranlage.

Die Last, in diesem Fall ein dreiphasiger Motor 27, wird an die zusmmengeschalteten Ausgänge der beiden Teilumrichter angeschlossen.

Soll ein Motor angetrieben werden, so muss eine entsprechende dreiphasige Stromsollgrösse an die Komparatoren 1 bis 3 des Host angelegt werden (I_{soll A}, I_{soll B}, I_{soll C}), wobei gemäss den kirchofschen Gesetzen natürlich gelten muss I_{soll A} + I_{soll B} + I_{soll C} = 0.

Als Beispiel für die Funktionsweise der Anlage wird im folgenden nur die Phase A betrachtet. Die beiden übrigen Phasen B und C funktionieren in analoger Weise.

Ist z.B. der Iststrom der Phase A im Vergleich zum Sollwert des Ausgangsstromes, der mit dem Strommessglied 52 gemessen wird, zu gering, so gibt der Komparator 1 den beiden Teilumrichtern die Anweisung, die entsprechenden Transistoren einzuschalten bzw. auszuschalten. Dieser Vorgang wird Gesamtstromregelung genannt.

Im Falle des Teilumrichters 1 wird in diesem Fall via Signalverzögerungseinheit 10 und Transistoransteuereinheit 13 der Transistor 16 eingeschaltet und gleichzeitig der Transistor 19 ausgeschaltet. Das Ausgangssignal vom Komparator 1 wird dabei in der Signalverzögerungseinheit 10 um eine Zeit T₀ + AT₁(A) verzögert. Die Zeit ΔT₁(A) kann positiv oder negativ sein, ist im Betrag aber immer kleiner als T₀, so dass T₀ + ΔT₁(A) > 0 sec ist. Mit der variablen Zeitverzögerung ΔT₁(A) kann nun der Ausgleichsstrom des Teilumrichters 1 im Sinne einer Ausgleichsregelung beeinflusst werden. Dies geschieht so, dass der Differenzverstärker 7 vom Stromsollwert, der vom Stromsollwertteiler 4 geliefert wird, den Stromistwert, der vom Strommessglied 46 geliefert wird, abzieht. Die Differenz ist ein Mass für die Abweichung des Stromsollwertes vom Istwert des Teilumrichters 1. Ist der Stromsollwert des Teilumrichters 1 zu gross, so wird das vom Komparator 1 kommende Signal für das Umschalten der Transistoren in der Weise verzögert, dass der Istwert des Ausgangsstromes des Teilumrichters 1 sich seinem Sollwert angleicht. Konkret heisst dies: ist der Istwert zu klein, wird ΔT₁(A) negativ, wenn der Transistor 16 ein- und der Transistor 19 ausgeschaltet wird, bzw. positiv, wenn der Transistor 16 aus- und der Transistor 19 eingeschaltet wird. Die Drossel 22 beschränkt bei diesem Regelvorgang lediglich die Steilheit der Stromänderung.

Im Falle des Teilumrichters 2 wird in diesem Fall via Signalverzögerungseinheit 31 und der Transistoransteuereinhzeit 34 der Transistor 37 eingschaltet und gleichzeitig der Transistor 40 ausgeschaltet. Das Ausgangssignal vom Komparator 1 wird dabei in der Signalverzögerungseinheit 31 um eine Zeit T₀ + ΔT₂(A) verzögert. Die Zeit ΔT₂(A) kann positiv oder negativ sein, ist im Betrag aber immer kleiner als T₀, so dass T₀ + ΔT₂(A) > 0 sec ist. Mit der variablen Zeitverzögerung ΔT₂(A) kann nun der Ausgangsstrom des Teilumrichters 2 im Sinne einer Ausgleichsregelung beeinflusst werden. Dies geschieht so, dass der Differenzverstärker 28 vom Stromsollwert, der vom Stromsollwertteiler 4 geliefert wird, den Stromistwert, der vom Strommessglied 49 geliefert wird, abzieht. Die Differenz ist ein Mass für die Abweichung des Stromsollwertes vom Istwert des Teilumrichters 2. Ist der Stromsollwert des Teilumrichters 2 zu gross, so wird das vom Komparator 1 kommende Signal für das Umschalten der Transistoren in der Weise verzögert, dass der Istwert des Ausgangsstromes des Teilumrichters 2 sich seinem Sollwert angleicht. Konkret heisst dies: ist der Istwert zu klein, wird ΔT₂(A) negativ, wenn der Transistor 37 ein- und der Transistor 40 ausgeschaltet wird, bzw. positiv, wenn der Transistor 37 aus- und der Transistor 40 eingeschaltet wird. Die Drossel 43 beschränkt bei diesem Regelvorgang lediglich die Steilheit der Stromänderung.

Da der Ausfall eines Umrichters sehr oft den Unterbruch ganzer Betriebsabläuft nach sich zieht, muss zumindest sichergestellt werden, dass eine Instandsetzung in kürzester Zeit erfolgen kann. Bei vielen Anwendungen reicht dies indessen nicht mehr aus und es wird gefordert, dass ein praktisch unterbruchsfreier Betrieb auch im Fehlerfall mögich ist.

Hierzu bietet sich das Redundanzprinzip an. Das heisst, fehlerhafte Teilsysteme werden aus dem Gesamtsystem herausgetrennt und ihre Aufgabe wird von anderen Komponenten übernommen. Dabei wird unterschieden zwischen dynamischer und statischer Redundanz:
Definition: dynamische Redundanz
Systeme, bei denen nur im Fehlerfall zusätzliche Komponenten miteingebunden werden.
Definition: statische Redundanz
Systeme, bei denen die zusätzlchen Komponenten auch im Nichtfehlerfall permanent im Einsatz stehen.

### Dynamische Redundanz:

In der Praxis sieht dynamische Redundanz so aus, dass eine komplette zweite Umrichteranlage bereitstehen muss, um im Fehlerfall die defekte Anlage zu ersetzen. Ob diese Reserveanlage bereits unter Spannung steht oder nicht, spielt letztlich keine Rolle, entscheidend ist die Zeit, bis alle Leistungs- und Steuerverbindungen umgeschaltet, bzw. umgehängt sind und der Betrieb voll wiederaufgenommen werden kann. Wirtschaftlich gesehen ist dynamische Redundanz vor allem bei Einzelanlagen ausserordentlich ungünstig, da im Normalfall immer eine Anlage unbenutzt bleibt. Neben den doppelt so grossen Investitions- und Wartungskosten wirkt sich auch der doppelte Platzbedarf sehr ungünstig aus. In Fällen, wo mehrere identische Anlagen am selben Ort in Betrieb sind, verbessert sich die Situation, da ein zusätzlicher Umrichter als Reserveanlage für alle übrigen dienen kann. Allerdings dürfen nicht mehrere Umrichter zur selben Zeit ausfallen, da jeweils nur einer von der Redundanz Gebrauch machen darf.

### Statische Redundanz:

Das Prinzip der dynamischen Redundanz lässt sich selbstverständlich auch bei zusammengeschalteten Umrichtern einsetzen. Dabei ist vor allem der Fall interessant, bei dem für einen zusammengeschalteten Umrichter, der aus einer bestimmten Anzahl von Teilumrichtern besteht, ein zusätzlicher Teilumrichter als Reserveeinheit bereitgestellt wird. Da die Leistung eines Teilumrichters verhältnismässig gering ist, sind auch die Kosten und der Platzbedarf für dieses Reservemodul entsprechend bescheiden.

Viel interessanter als die dynamische Redundanz ist bei parallelen Umrichtern allerdings der Fall der statischen Redundanz. Dazu folgendes Beispiel:

An eine Umrichteranlage wird die Forderung gestellt, eine Leistung von 350 kVA mit hoher Zuverlässigkeit zu erbringen. Aufgebaut wird die Anlage als zusammengeschalteter Umrichter mit 8 Teilumrichtern zu je 50 kVA. Die installierte Leistung beträgt so total 400 kVA. Fällt ein Teilumrichter durch einen irreversiblen Schaden aus, so wird dieser aus dem Verband herausgetrennt und die restlichen 7 Teilumrichter führen den Betrieb weiter mit maximal 350 kVA aus.

Für das eben beschriebene Heraustrennen eines defekten Teilumrichters gibt es nun verschiedene Varianten, von denen zwei nachfolgend genauer beschrieben werden:
- Heraustrennen durch einen mechanischen Vorgang
- Heraustrennen durch einen elektro-thermischen Vorgang.

### Mechanisches Heraustrennen:

Darunter sind manuelle Tätigkeiten wie das Lösen von Kabelverbindungen oder das Heraustrennen durch Leistungsschütze zu versehen. Dabei sind die zu schaltenden Ströme entsprechend der Leistung eines Teilumrichters, relativ niedrig.

### Elektro-thermisches Heraustrennen:

Hierbei wird von der Möglichkeit Gebrauch gemacht, dass Leistungen bis etwa 50 kVA relativ gut durch Schmelzsicherungen abgesichert werden können. Im Fehlerfall wird der defekte Teilumrichter gegebenenfalls "abgeschossen", indem die (n-1) gesunden Teilumrichter gemeinsam so viel Strom in das fehlerhafte Gerät "pumpen", dass dessen Schmelzsicherungen durchbrennen. Dieser Vorgang kann on-line vorgenommen werden, das heisst, die angeschlossene Last, z.B. ein Motor, wird praktisch nichts vom ganzen Vorgang bemerken. Wie dieser "Abschiessvorgang" eines Teilumrichters vonstatten geht, soll nun genauer betrachtet werden.

### Statische Redundanz durch "Abschiessen" von Teilumrichtern:

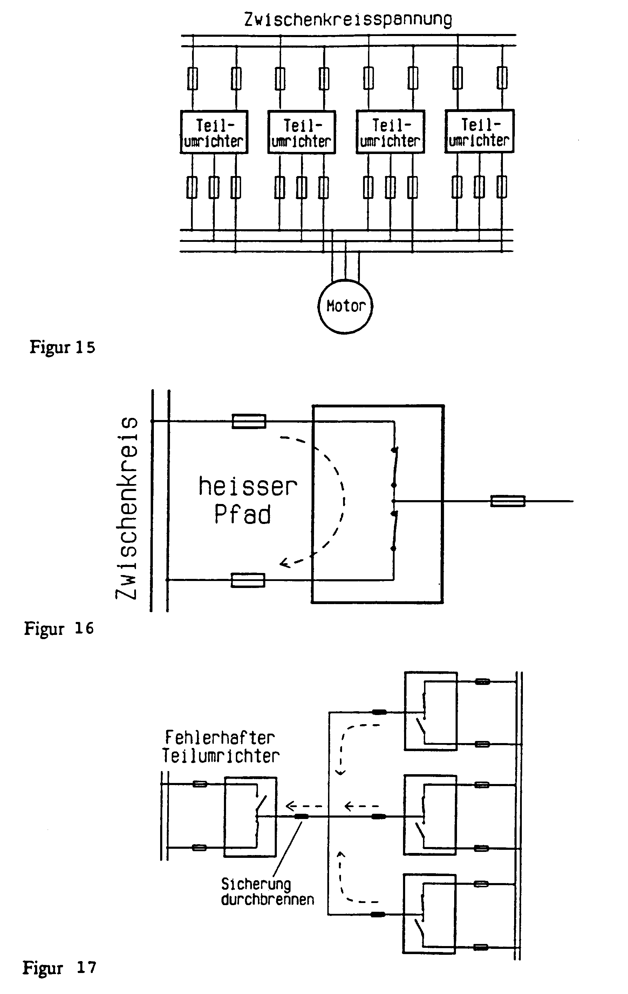

Bei diesem Verfahren werden die Teilumrichter sowohl auf der Seite des Zwischenkreises (entspricht dem Eingang) wie auch ausgangsseitig durch Schmelzsicherungen verbunden. Es sei noch einmal gesagt, dass diese Schmelzsicherungen nicht die Aufgabe haben, die Halbleiter zu schützen, dazu sind sie viel zu langsam, sondern sie dienen lediglich dazu, einen fehlerhaften Teilumrichter gegebenenfalls abzutrennen, siehe Figur 15.

Die Sicherungen auf Seiten des Zwischenkreises treten dabei bei einem "heissen Pfad" im Innern eines Teilumrichters in Funktion, wenn gleichzeitig der obere und der untere Schalter in einem Zweig geschlossen sind, siehe Figur 16.

Die Ausgangssicherungen ermöglichen das Abtrennen, wenn der Phasenstrom eines Teilumrichters aus irgendeinem Grund nicht mehr kontrolliert werden kann. Dabei geht man davon aus, dass die (n-1) gesunden Teilumrichter genügend Strom liefern können, um die entsprechende Phasensicherung durchbrennen zu lassen, siehe Figur 17.

Das Verhalten des Gesamtsystems bleibt dabei immer dasselbe:

Tritt ein Fehler in einem Teilumrichter auf, so werden dessen Schalter geöffnet, ist dies nicht möglich, wird stattdessen die betreffende Ausgangssicherung durchgebrannt und der Betrieb mit (n-1) Teilumrichtern fortgesetzt.

Der Aufwand für dieses Redundanzprinzip ist verhältnismässig gering, wenn man bedenkt, dass das ganze Verfahren on-line durchgeführt werden kann. Geht man zudem von einer üblichen Umrichterdimensionierung aus, bei der die installierte Leistung ohnehin immer höher angesetzt wird als unbedingt nötigt, so ist es oft nicht einmal erforderlich, zusätzliche Leistungsreserven für die Redundanz miteinzuberechnen.

Statt der Schmelzsicherungen können auch andere Schaltgeräte, insbesondere Schützen für obige Aufgaben, eingesetzt werden.

Werden in einem Antrieb mehrere Motoren parallel betrieben, kann ein zusätzlicher Motor mittels eines vorher abgetrennten Teilumrichters hochgefahren werden. Nach dem Hochfahren wird dieser Teilumrichter wieder mit den übrigen Umrichtern verbunden.

In vielen Fällen wird von Antrieben nur zu bestimmten Zeiten die volle Leistung verlangt, z.B. während des Anfahrens. In der übrigen Zeit genügt eine sehr viel geringere Leistung für die Aufrechterhaltung des Betriebes. Aus diesem Grund kann eine Umrichteranlage konzipiert werden, die aus einer grossen Anzahl einzelner Umrichtern besteht, welche mit geeigneten Verfahren beliebig auf Sammelschienen zusammengeschaltet werden können. Mit anderen Worten, die Umrichterleistung wird dynamisch, je nach Anforderungen auf die Lasten aufgeteilt. Damit kann die gesamte installierte Umrichterleistung in einer Anlage reduziert werden.

## Patentansprüche

1. Verfahren zum Parallelschalten von Umrichtern, (7-21; 28-42) mit Pulsmodulation, bei dem die Anzahl Ausgänge jedes Umrichters unbeschränkt ist, bei dem Ausgangsgrössen beliebig vorgegeben werden können, bei dem die Ausgänge direkt oder über Drosseln (22-24; 43-45) miteinander verbunden werden, und bei dem die Zahl der parallelgeschalteten Umrichter beliebig ist, dadurch gekennzeichnet, dass eine mittels zeitlichen Verschiebungen von Anfangs- und/oder Endzeiten der Pulse durchgeführte Regelung die Stromverteilung zwischen den einzelnen Umrichtern bestimmt indem eine Regelgrösse (ΔTₖ(A) ; k = 1...n) das Pulsdauerverhältnis zwischen den parallelgeschalteten Umrichtern variiert, um in Abhängigkeit von elektrischen Ist- und/oder Sollwerten eine gewünschte Stromverteilung zwischen den einzelnen Umrichtern zu erzwingen.

2. Verfahren nach Anspruch 1, dadurch gekennzeichnet, dass die Regelgrösse aus mindestens zwei der folgenden Grössen berechnet wird: Sollwert des Stromes, Istwert des Stromes, Stromasymmetrie, wirksame Induktivität zwischen den Umrichtern, Spannung über der Anschlussinduktivität, Spannung des Zwischenkreises.

3. Vorrichtung zur Durchführung des Verfahrens nach Anspruch 1 oder 2, dadurch gekennzeichnet, dass die Umrichterausgänge über magnetisch gekoppelte oder nicht gekoppelte Anschlussdrosseln (22-24; 43-45) zusammengeschaltet sind.

4. Vorrichtung nach einem der vorhergehenden Ansprüche, dadurch gekennzeichnet, dass die Umrichterausgänge über strombeeinflussende Elemente, wie lineare und nichtlineare Widerstände zusammengeschaltet sind.

5. Vorrichtung nach einem oder mehreren der Ansprüche 3 bis 4, dadurch gekennzeichnet, dass ein Leitsystem (1-6; 52-54) oder eine Gruppe von Leitsystemen die Betriebswerte und Schaltzustände der einzelnen parallelgeschalteten Umrichter festlegt.

6. Vorrichtung nach einem der Ansprüche 3 bis 5, dadurch gekennzeichnet, dass ein hierarchisch in zwei oder mehr Stufen gegliedertes Leitsystem (Host) die Betriebswerte und Schaltzustände der einzelnen parallelgeschalteten Umrichter festlegt.

7. Vorrichtung nach einem der Ansprüche 3 bis 6, gekennzeichnet durch eine in einem Teilumrichter integrierte Hostschaltung, die eingerichtet ist, um die Leitfunktion für alle anderen Umrichter zu übernehmen.

8. Vorrichtung nach einem der Ansprüche 3 bis 6, dadurch gekennzeichnet, dass jeder Teilumrichter eine integrierte Hostschaltung aufweist, die eingerichtet ist, um die Leitfunktion für alle anderen Umrichter zu übernehmen, sowie durch eine Schaltung, um während des Betriebes und ohne Unterbrechung der normalen Umrichterfunktion wahlweise eine der Hostschaltungen zu aktivieren.

9. Vorrichtung nach einem der Ansprüche 3 bis 8, dadurch gekennzeichnet, dass zur Sicherung des unterbrechungsfreien Betriebes der Umrichter aus einem Ensemble von parallel oder reihengeschalteter Umrichter einzelne oder Gruppen von Umrichtern freizügig und ohne Unterbrechung der üblichen Umrichterfunktion zu- und wegschaltbar sind.

10. Vorrichtung nach Anspruch 9, gekennzeichnet durch elektronische, thermische oder mechanische Mittel, um das Zu- oder Wegschalten durchzuführen.

11. Vorrichtung nach Anspruch 9, dadurch gekennzeichnet, dass die Eingänge der zusammengeschalteten Umrichter über elektronische, thermische oder mechanische Schaltgeräte verbunden sind.

12. Vorrichtung nach Anspruch 9, dadurch gekennzeichnet, dass die Ausgänge der zusammengeschalteten Umrichter über elektronische, thermische oder mechanische Schaltgeräte verbunden sind.

13. Vorrichtung nach einem oder mehreren der Ansprüche 9 bis 12, gekennzeichnet durch elektronische, thermische oder mechanische Schaltgeräte, um fehlerhafte Umrichter herauszutrennen.

14. Vorrichtung nach einem oder mehreren der Ansprüche 9 bis 13, dadurch gekennzeichnet, dass einzelne Umrichter aus einem Verband von zusammengeschalteten Umrichtern für Kontroll- oder Servicearbeiten während des Betriebes abtrennbar sind.

15. Vorrichtung nach Anspruch 9, dadurch gekennzeichnet, dass einzelne Umrichter gesteuert sind, um als Anfahrumrichter verwendet zu werden.

16. Vorrichtung nach Anspruch 9, gekennzeichnet durch Mittel, um eine variable Zuteilung von beliebigen Umrichtern oder Umrichtergruppen auf eine oder mehrere Lasten (Motor) durchzuführen.

17. Vorrichtung nach Anspruch 9, dadurch gekennzeichnet, dass gewisse Umrichter gesteuert sind, um je nach Leistungsbedarf der Last (27, Motor) während des Betriebes zu- und weggeschaltet zu werden.

## Claims

1. Method for the parallel connection of frequency converters (7 to 21; 28 to 42) with pulse modulation, in which the number of outputs of each frequency converter is unrestricted, for which output magnitudes can be preset as desired, and in which the outputs are connected one with the other either directly or by way of chokes (22 to 24; 43 to 45) and the number of parallelly connected frequency converters is as desired, characterised thereby, that a regulation, which is performed by time displacement of the start and/or end times of the pulses, determines the current distribution between the individual frequency converters in that a regulating magnitude (ΔTₖ(A); k = 1 to n) varies the pulse duration ratio between the parallelly connected frequency converters in order to force a desired current distribution between the individual frequency converters in dependence on electrical actual and/or target values.

2. Method according to claim 1, characterised thereby, that the regulating magnitude is computed from at least two of the following magnitudes: target value of the current, actual value of the current, asymmetry of the current, effective inductance between the frequency converters, voltage across the connecting inductance and voltage of the intermediate circuit.

3. Device for the performance of the method according to claim 1 or 2, characterised thereby, that the frequency converter outputs are connected together by way of connecting chokes (22 to 24; 43 to 45), which are or are not coupled magnetically.

4. Device according to claim 3, characterised thereby, that the frequency converter outputs are connected together by way of current-influencing elements such as linear and non-linear resistors.

5. Device according to one or more of the claims 3 and 4, characterised thereby, that a command system (1 to 6; 52 to 54) or a group of command systems fixes the operating values and switching states of the individual parallelly connected frequency converters.

6. Device according to one of the claims 3 to 5, characterised thereby, that a command system (host), which is divided hierarchically into two or more stages, fixes the operating values and switching states of the individual parallelly connected frequency converters.

7. Device according to one of the claims 3 to 6, characterised by a host circuit which is integrated into a partial frequency converter and equipped to take over the command function for all other frequency converters.

8. Device according to one of the claims 3 to 6, characterised thereby, that each partial frequency converter comprises an integrated host circuit which is equipped to take over the command function for all other frequency converters as well as characterised by a circuit in order to activate one of the host circuits selectably during the operation and without interruption of the normal frequency converter function.

9. Device according to one of the claims 3 to 8, characterised thereby, that individual ones or groups of frequency converters of an ensemble of frequency converters, which are connected in parallel or in series, are switchable in and out freely and without interruption of the usual frequency converter function for securing the uninterrupted operation of the frequency converters.

10. Device according to claim 9, characterised by electronic, thermal or mechanical means for performing the switching in or out.

11. Device according to claim 9, characterised thereby, that the inputs of the frequency converters, which are connected together, are connected by way of electronic, thermal or mechanical switching devices.

12. Device according to claim 9, characterised thereby, that the outputs of the frequency converters, which are connected together, are connected by way of electronic, thermal or mechanical switching devices.

13. Device according to one or more of the claims 9 to 12, characterised by electronic, thermal or mechanical switching devices for switching out faulty frequency converters.

14. Device accordng to one or more of the claims 9 to 13, characterised thereby, that individual frequency converters of a combination of frequency converters, which are connected together, are separable during the operation for checking and servicing operations.

15. Device according to claim 9, characterised thereby, that individual frequency converters are controlled in order to be used as starting frequency converters.

16. Device acccording to claim 9, characterised by means for performing a variable allocation of any desired ones or groups of frequency converters to one or more loads (motor).

17. Device according to claim 9, characterised thereby, that certain frequency converters are controlled to be switched in and out during the operation according to the power requirement of the load (27, motor).

## Revendications

1. Procédé pour le montage en parallèle de convertisseurs de fréquence (7-21 ; 28-42) à modulation par impulsions, selon lequel le nombre de sorties de chaque convertisseur de fréquence est illimité, des grandeurs de sortie peuvent être prédéfinies à volonté, les sorties sont reliées entre elles directement ou par l'intermédiaire de bobines de choc (22-24 ; 43-45) et le nombre de convertisseurs de fréquence montés en parallèle est quelconque, caractérisé en ce qu'une régulation réalisée à l'aide de décalages dans le temps de moments de début et/ou de fin des impulsions définit la répartition de courant entre les différents convertisseurs de fréquence, une grandeur réglée (ΔTₖ(A) ; k=1...n) faisant varier le rapport de durée d'impulsion entre les convertisseurs de fréquence montés en parallèle afin d'imposer une répartition de courant souhaitée entre les différents convertisseurs de fréquence en fonction de valeurs électriques réelles et/ou théoriques.

2. Procédé selon la revendication 1, caractérisé en ce que la grandeur réglée est calculée à partir d'au moins deux des grandeurs suivantes : valeur théorique du courant, valeur réelle du courant, asymétrie de courant, inductivité effective entre les convertisseurs de fréquence, tension sur l'inductivité de raccordement, tension du circuit intermédiaire.

3. Dispositif pour la mise en oeuvre du procédé selon la revendication 1 ou 2, caractérisé en ce que les sorties des convertisseurs de fréquence sont interconnectées par l'intermédiaire de bobines de choc de raccordement (22-24 ; 43-45) couplées par voie magnétique ou non couplées.

4. Dispositif selon la revendication 3, caractérisé en ce que les sorties des convertisseurs de fréquence sont interconnectées par l'intermédiaire d'éléments influençant le courant tels que des résistances linéaires et non linéaires.

5. Dispositif selon l'une au moins des revendications 3 à 4, caractérisé en ce qu'un système central (1-6 ; 52-54) ou un groupe de systèmes centraux détermine les valeurs d'exploitation et les états de commutation des différents convertisseurs de fréquence montés en parallèle.

6. Dispositif selon l'une des revendications 3 à 5, caractérisé en ce qu'un réseau (système central) divisé hiérarchiquement en deux étages ou plus détermine les valeurs d'exploitation et les états de commutation des différents convertisseurs de fréquence montés en parallèle.

7. Dispositif selon l'une des revendications 3 à 6, caractérisé par un circuit central, intégré dans un convertisseur partiel, qui est installé pour prendre en charge la fonction de commande pour tous les autres convertisseurs de fréquence.

8. Dispositif selon l'une des revendications 3 à 6, caractérisé en ce que chaque convertisseur partiel comporte un circuit central intégré qui est installé pour prendre en charge la fonction de commande pour tous les autres convertisseurs de fréquence, et caractérisé par un circuit destiné à activer sélectivement l'un des circuits centraux pendant le fonctionnement et sans interruption du fonctionnement normal des convertisseurs de fréquence.

9. Dispositif selon l'une des revendications 3 à 8, caractérisé en ce que pour protéger le fonctionnement sans interruption des convertisseurs de fréquence formés d'un ensemble de convertisseurs de fréquence montés en parallèle ou en série, des convertisseurs individuels ou groupés sont aptes à être ajoutés au montage et supprimés de celui-ci librement et sans interruption du reste du fonctionnement des convertisseurs.

10. Dispositif selon la revendication 9, caractérisé par des moyens électroniques, thermiques ou mécaniques destinés à réaliser l'adjonction ou la suppression dans le montage.

11. Dispositif selon la revendication 9, caractérisé en ce que les entrées des convertisseurs de fréquence interconnectés sont reliées par l'intermédiaire d'appareils de commutation électroniques, thermiques ou mécaniques.

12. Dispositif selon la revendication 9, caractérisé en ce que les sorties des convertisseurs de fréquence interconnectés sont reliées par l'intermédiaire d'appareils de commutation électroniques, thermiques ou mécaniques.

13. Dispositif selon l'une au moins des revendications 9 à 12, caractérisé par des appareils de commutation électroniques, thermiques ou mécaniques destinés à séparer les convertisseurs de fréquence défectueux.

14. Dispositif selon l'une au moins des revendications 9 à 13, caractérisé en ce que des convertisseurs de fréquence individuels sont aptes à être séparés d'un ensemble de convertisseurs de fréquence interconnectés pendant le fonctionnement en vue de travaux de contrôle ou d'entretien.

15. Dispositif selon la revendication 9, caractérisé en ce que des convertisseurs de fréquence individuels sont commandés afin d'être utilisés comme convertisseurs de fréquence de démarrage.

16. Dispositif selon la revendication 9, caractérisé par des moyens destinés à effectuer une répartition variable de convertisseurs de fréquence quelconques ou de groupes de convertisseurs de fréquence sur une ou plusieurs charges (moteur).

17. Dispositif selon la revendication 9, caractérisé en ce que certains convertisseurs de fréquence sont commandés afin d'être ajoutés au montage et supprimés de celui-ci pendant le fonctionnement suivant le besoin de puissance de la charge (27, moteur).
